# EUROPEAN PATENT SPECIFICATION

(11) **EP 1 408 127 B1**
(45) Date of publication and mention of the grant of the patent: **03.11.2004**
(21) Application number: 02735443.0
(22) Date of filing: 06.06.2002
(51) Int. Cl.: C22B 41/00, C22B 7/02, C22B 3/04

(54) **METHOD FOR RECOVERING GERMANIUM AND OTHER METALS FROM FLY ASH GENERATED IN AN INTEGRATED GASIFICATION COMBINED CYCLE-TYPE (IGCC) THERMAL STATION**
VERFAHREN ZUR RÜCKGEWINNUNG VON GERMANIUM UND ANDEREN METALLEN AUS FLUGASCHEN VON EINEM KRAFTWERK DER ART MIT INTEGRIERTER KOHLEVERGASUNG UND KOMBINIERTEM ZYKLUS (IGCC)
PROCEDE DE RECUPERATION DE GERMANIUM ET AUTRES METAUX A PARTIR DE CENDRES VOLANTES GENEREES DANS UNE CENTRALE THERMIQUE DU TYPE A GAZEIFICATION INTEGREE A CYCLE COMBINE (IGCC)

(30) Priority: 07.06.2001 ES 200101328
(43) Date of publication of application: 14.04.2004
(73) Proprietor: Elcogas, S.A., 13500 Puertollano-Ciudad Real (ES)
(72) Inventor: BURGOS RODR GUEZ, Silvia, E-13500 Puertollano-Ciudad Real (ES); QUEROL CANCELLER, Xavier, 08028 Barcelona (ES); FONT PIQUERAS, Oriol, 08028 Barcelona (ES); LOPEZ SOLER, Angel, 08028 Barcelona (ES); PLANA LLEVAT, Feliciano, 08028 Barcelona (ES); ESPIELL ALVAREZ, Ferran, 08028 Barcelona (ES); CHIMENOS RIBERA, Josep Maria, 08028 Barcelona (ES); FERNANDEZ RENNA, A., Ines, 08028 Barcelona (ES)
(74) Representative: Irache Pereira Tona, Maria
(86) International application number: PCT/ES2002/000275
(87) International publication number: WO 2002/099145

(56) References cited:
- WO-A-98/08585
- CA-A- 1 238 192
- ZOUBOULIS ET AL.: 'Possibility of germanium recovery from fly ash' CHIMIKA CHRONIKA vol. 18, no. 2-3, 1989, pages 85 - 97, XP002961447
- TSUBOI ET AL.: 'Recovery of gallium and vanadium from coal fly ash' J. CHEMICAL ENGINEERING OF JAPAN vol. 24, no. 1, 1991, pages 15 - 20, XP002961448

## Description

### FIELD OF THE INVENTION

The invention generally refers to a process for recovering metals, specifically germanium, gallium, vanadium and nickel, from fly ash generated in an Integrated Gasification Combined Cycle (IGCC) type thermal power plant.

### BACKGROUND OF THE INVENTION

Steel mills and thermal power plants generally produce a relatively significant amount of fly ash containing variable concentrations of valuable metals, for example germanium (Ge), gallium (Ga), vanadium (V), nickel (Ni), etc., that justify the recovery thereof. Different processes are known for recovering said metals from said ash. As an illustrative example, US patent 4,244,735 can be mentioned, which discloses a process for recovering Ge from fly ash originating from a steel mill upon lixiviation with chlorides; US patent 4,915,730 discloses the recovery of Ga from fly ash by means of a process that comprises mixing said fly ash with sodium chloride, burning the mixture in the presence of oxygen, solubilizing with cyanide and the subsequent precipitation; or French patent FR 2,187,878 discloses the recovery of V from fly ash by means of lixiviation with an aqueous alkaline solution. Murase K. et al. [J. Alloys Compd., 264 (1-2), 151-156 (1998)] describe the recovery of V, Ni and Mg from fly ash from a bitumen-in-water emulsion by chlorination and chemical transport.

The use of sulphuric acid or caustic soda for leaching germanium from fly ash generated in power plants is disclosed by A.I. Zouboulis et al., " Possibility of Germanium Recovery from fly ash," Chimika Chronika, New Series, 18, 85-97 (1989).

Integrated Gasification Combined Cycle (IGCC) type thermal power plants produce electric energy by means of a technology differing from that of conventional thermal power plants, which consists of a process of gasification of a fuel at a high temperature to generate a synthetic gas that is subsequently burned in a combined cycle to produce electric energy. This process generates solid residues in the form of fly ash and vitreous slag that is insoluble in water. The chemical composition of the fly ash generated in an IGCC type power plant depends on the fuel used, generally, however, they are essentially composed of silica and aluminum oxide, with much smaller ratios of different metallic oxides, for example, of sodium, potassium, magnesium, calcium, manganese, germanium, gallium, vanadium, nickel, in addition to iron, lead, zinc sulfides and other metals.

The normal destination of the fly ash generated in an IGCC type power plant consists of its deposit in controlled dumps. This destination has several drawbacks since, on one hand, there is a risk that the metals present in the ash will be lixiviated and passed to the aquifers, thus generating a serious environmental problem, and on the other hand, as it is expected that the amount of this type of ash will gradually increase due to a progressive implantation of IGCC technology, a larger number of dumps or larger dumps are going to be required, provided with the suitable emissions sealing and control conditions. In order to get an approximate idea of the magnitude of the problem, it is enough to mention that approximately 16,000 tons of fly ash are generated annually in the ELCOGAS IGCC type power plant in Puertollano (Ciudad Real).

### SUMMARY OF THE INVENTION

The invention faces the problem of developing an alternative treatment to dumping in dumps that is currently carried out with large amounts of fly ash generated as a residue in an IGCC type thermal power plant.

The solution provided by this invention is based on the recovery of Ge from said fly ash by means of lixiviation in water the Ge is thereby solubilized and a solid phase is separated containing other valuable metals, for example Ga, V, Ni, etc., that can be recovered by means of suitable treatments.

The solution proposed by the invention prevents dumping said residue with the contamination problems it involves, and, furthermore, permits recovering valuable metals and valorization of said residues.

### BRIEF DESCRIPTION OF THE DRAWINGS

Figure 1 shows the result of the mineralogical analysis by means of X-ray diffraction of two IGCC ash samples.
Figure 2 shows 2 graphs representing the granulometric analysis results of 2 representative IGCC ash samples.
Figure 3 shows 2 graphs representing the effect of temperature (25°C and 50°C) on Ge content lixiviation with water in an IGCC ash sample, changing the lixiviation time (or residence) and solid/liquid ratio.

### DETAILED DESCRIPTION OF THE INVENTION

The invention refers to a process for recovering valuable metals, for example germanium, gallium, vanadium and/or nickel, from fly ash generated in an Integrated Gasification Combined Cycle (IGCC) type thermal power plant, heretofore IGCC ash. Said process comprises solubilizing Ge after subjecting said IGCC ash to lixiviation in an aqueous medium and, if desired, recovering one or more valuable metals present in the solid phase resulting after lixiviation, for example Ga, V or Ni, by means of suitable treatments.

### I. IGCC ash

IGCC ash generated in fuel combustion in an IGCC type power plant constitutes the starting material for recovering valuable metals. In a particular embodiment, said fuel is constituted of a mixture of coal and petroleum coke, in different ratios between them.

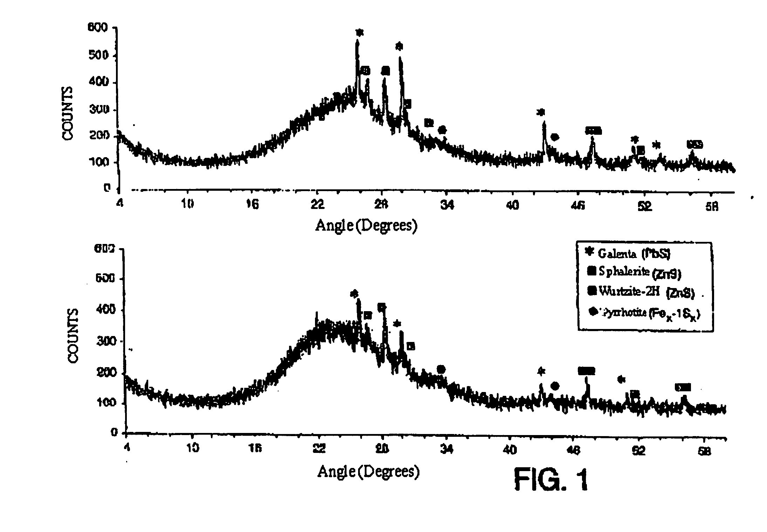

The physical-chemical and mineralogical characterization of IGCC ash clearly shows that said IGCC ash has specific properties depending on the fuel used in the IGCC type power plant, in other words, on the ratio of coal and coke and on the relative composition thereof. In a particular embodiment, the fuel used in the IGCC type thermal power plant is a mixture of coal and petroleum coke (1:1), generating IGCC ash that has the typical composition included in Table 1 and Figure 1 of Example 1, which also describe the mineralogical characterization of typical IGCC ash.

As can be seen, said IGCC ash is essentially composed of silica and aluminum oxide, with much smaller ratios of different metal oxides, for example, of sodium, potassium, magnesium, calcium, manganese, germanium, gallium, vanadium, nickel, in addition to calcium, iron, lead, zinc sulfides and other metals.

### II. Ge recovery

The invention provides a process for recovering Ge from IGCC ash, which comprises:
a) lixiviating said IGCC ash with water to solubilize all or part of the Ge content in said IGCC ash;
b) separating the solid and liquid phases existing in the solution or suspension resulting from step a) into a solid phase (S1) and into a liquid phase (L1) containing Ge; and
c) recovering the Ge from said liquid phase (L1).

Generally, the state of the art clearly shows that in order to extract Ge from fly ash generated in steel mills or conventional thermal power plants, it is necessary to carry out complex distillations with different solvents due to the fact that germanium oxide (GeO₂), which normally appears in these materials, is a water insoluble clinorhombic form. Surprisingly, however, in IGCC ash (obtained in a gasification process in determined pressure and temperature conditions), GeO₂ seems to be a water soluble, hexagonal shape, which permits the extraction thereof from the IGCC ash by means of using water.

Lixiviation can be carried out in varying conditions within broad intervals. In a particular embodiment, the lixiviation of the IGCC ash can be carried out at a temperature comprised between 0°C and 400°C, for a time period comprised between 6 and 24 hours, with a liquid/solid ratio comprised between 1 and 10 (1 to 101 of the extracting agent per kg of IGCC ash to be lixiviated), depending on the Ge content of the IGCC ash and on the concentration thereof that is to be reached in the lixiviate [liquid phase (L1)]. Lixiviation can be carried out in any suitable container, for example, a closed or optionally open reactor provided with stirring means. By operating in the aforementioned conditions, it is possible to extract an amount of Ge that is equal to or greater than 85% of the Ge initially present in the treated IGCC ash. After lixiviating the IGCC ash, a suspension is obtained containing a solid phase and a liquid phase that can be separated into a solid phase (S1), containing valuable metals such as Ga, V or Ni, and into a liquid phase (L1) containing Ge together with other water soluble metals, by means of conventional methods and techniques, for example by means of using a filter press or centrifugation, and optionally washing the solid phase S1 to increase the extraction yield.

The recovery of the Ge content in the liquid phase (L1) can be carried out by conventional methods, for example by means of using ion exchange resins [Sahoo S.K., Bull. Chem. Soc. Japan, 68(8), 2484-2487 (1991)], extraction with solvents [US 4,915,919; US 4,432,952; Cote G & Bauer D., Hydrometallurgy, 5, 149-160 (1980); Li X. Et al., Source Xiandai Huagong, 20(8), 34-36, (2000)], or by means of precipitation with sulfides [Kirk-Othmer Encyclopedia of Chemical Technology, 12, 545-547; Ullmann's Encyclopedia of Industrial Chemistry, 12, 354-358].

In a particular embodiment, Ge recovery comprises concentrating the Ge solubilized in the liquid phase (L1) into a germanate form by means of using an ion exchange resin of the anionic type in order to extract Ge, optionally together with other elements that may be forming anions, for example arsenic (As), which could be found in the arsenate form and which would solubilize together with Ge during lixiviation of the IGCC ash. Ge can be separated as from the liquid phase resulting from the regeneration of the anion exchange resin by means of distillation thereof in the form of tetrachloride after adding chlorine to said liquid phase. Adding chlorine permits oxidizing the possible As present in the liquid phase resulting from the regeneration of the anion exchange resin to As⁵⁺. The germanium tetrachloride obtained in the liquid phase is a commercial product. Alternatively, the germanium tetrachloride could be hydrolyzed in an aqueous medium to obtain germanic acid and from it, by means of drying, obtain germanium oxide.

In another particular embodiment, the recovery of Ge present in the liquid phase (L1) is carried out by means of selective extraction of Ge with a suitable solvent.

In another particular embodiment, the recovery of Ge present in the liquid phase (L1) is carried out by means of precipitation in the form of sulfide after adding, for example, sodium sulfide.

### III. Recovery of other valuable metals (Ga, V, Ni)

The invention also contemplates the possibility to recover valuable metals present in the solid phase S1. Therefore, in a particular embodiment, the invention provides a process for obtaining Ga and/or V as from the solid phase (S1) resulting from the lixiviation of the IGCC ash with water comprising:
a) lixiviating said solid phase (S1) with an extracting agent comprising an aqueous base solution to solubilize all or part of the Ga and/or V content in said solid phase (S1);
b) separating the solid and liquid phases existing in the suspension resulting from step a) into a solid phase (S2) and into a liquid phase (L2) containing Ga and/or V; and
c) recovering the Ga and/or V from said liquid phase (L2).

The extracting agent is an aqueous base solution, for example an aqueous sodium or potassium hydroxide solution, with a concentration comprised between 0.1 and 5 M, preferably between 2 and 3 M. Lixiviation is carried out at a basic pH, preferably comprised between 12 and 14; in heat, at a temperature comprised between 50°C and 250°C, preferably between 150°C and 200°C; and with a solid/liquid ratio comprised between 1/2 and 1/20, preferably 1/5 or 1/10. After lixiviating the solid phase (S1) with an alkaline solution, a suspension is obtained by means of conventional methods and techniques that contains a solid phase and a liquid phase that can be separated into a solid phase (S2) and into a liquid phase (L2) containing Ga and /or V, together with other metals that are soluble in an alkaline medium.

The recovery of Ga and/or V present in the liquid phase (L2) can be performed by means of conventional methods, for example by means of extraction with the suitable solvents, as from an alkaline solution [Gutiérrez B. Et al., Waste Management Research, 15(4), 371-381 (1997)] or from an acid solution [Gutiérrez B. Et al., Solvent Extraction and Ion Exchange, 11(5), 769-782 (1993); Gutiérrez B. Et al., J. Chem. Tech. Biotechnol., 61, 241-245 (1994)] or by means of precipitation by neutralizing the liquid phase (L2) [Ullmann's Encyclopedia of Industrial Chemistry, 12, 164-166].

In another particular embodiment, the invention provides a process for obtaining Ni as from the solid phase (S1) resulting from the lixiviation of the IGCC ash with water, comprising:
a) lixiviating said solid phase (S1) with an extracting agent comprising an aqueous acid solution to solubilize all or part of the Ni content in said solid phase (S1);
b) separating the solid and liquid phases existing in the suspension resulting from step a) into a solid phase (S3) and into a liquid phase (L3) containing Ni; and
c) recovering the Ni from said liquid phase (L2).

The extracting agent is an aqueous acid solution, such as an aqueous solution of an organic acid, for example acetic acid, etc., or of an inorganic acid, for example nitric, hydrochloric, hydrofluoric, perchloric acid, etc., with a concentration comprised between 0.1 and 5 M, preferably between 2 and 3 M. Lixiviation is carried out in heat at a temperature comprised between 50°C and 250°C. After lixiviating the solid phase (S1) with an acid solution, a suspension is obtained by means of conventional methods and techniques that contains a solid phase and a liquid phase that can be separated into a solid phase (S3) and into a liquid phase (L3) containing Ni, together with other metals that are soluble in an acid medium. The recovery of Ni present in the liquid phase (L3) can be carried out by conventional methods, for example by means of selective extraction with a suitable solvent, or by means of precipitation by neutralizing the liquid phase (L3) [Khanra S. et al., Water, Air and Soil Pollution, 107, 251-275 (1998); Tsai S-L & Tsai M-S, Kuangye (Taipei), 42(3), 35-46 (1998)].

As can be seen, the invention provides a process for upgrading IGCC ash, which comprises recovering Ge and possibly other valuable metals such as Ga, V and/or Ni. Furthermore, other valuable metals could be recovered that are present in the IGCC ash in concentrations that justify the recovery thereof, for example lead, zinc, antimony, etc.

A feature of the process of recovering valuable metals provided by this invention is based on its modular character, such that it can be applied for recovering only those valuable metals Ge and (Ga, V and/or Ni) present in a concentration justifying the recovery thereof, or alternatively, it can be applied completely so as to carry out an integral treatment of said IGCC ash and recover said valuable metals (Ge, Ga, V and/or Ni).

The following examples serve to illustrate the invention and must not be considered limiting of the scope thereof.

### EXAMPLE 1

### Obtaining IGCC ash

The gasification of fuels composed of coal and petroleum coke in an IGCC type thermal power plant gave way to IGCC ash. The main features of said IGCC ash are included below.

### Chemical composition

The representative and typical chemical composition of generated IGCC ash is included in Table 1.

**Table 1**

| **Representative and typical composition of IGCC ash expressed in % for larger oxides and elements and in mg/kg for trace elements** | | |
|---|---|---|
| | **Representative** | **Typical** |
| **%** | | |
| SiO₂ | 50.0-65.0 | 62.6 |
| Al₂O₃ | 15.0-25.0 | 17.8 |
| Ca | 2.0-5.0 | 2.3 |
| Fe | 2.0-5.0 | 3.4 |
| K | 2.5-4.0 | 3.0 |
| S | 0.8-1.8 | 1.1 |
| Pb | 0.2-0.8 | 0.4 |
| Zn | 0.2-0.8 | 0.4 |
| Mg | 0.3-0.7 | 0.5 |
| TiO₂ | 0.3-0.7 | 0.6 |
| P₂O₅ | 0.4-0.7 | 0.4 |
| V | 0.3-0.6 | 0.5 |
| Na | 0.3-0.5 | 0.4 |
| Ni | 0.1-0.3 | 0.2 |
| | | |

| **mg/kg** | | |
|---|---|---|
| As | 450-850 | 564 |
| Ga | 100-350 | 149 |
| Ge | 100-350 | 194 |
| Mn | 200-600 | 472 |

### Mineralogical composition

The mineralogical characterization of IGCC ash was carried out buy means of X ray diffraction. The results of the mineralogical characterization of a typical IGCC ash sample are shown in Figure 1, where the presence of the phases corresponding to galena (PbS), sphalerite (ZnS), wurtzite-2H (ZnS) and pyrrhotite (Feₓ-1Sₓ) can be seen. Furthermore, the acid pH and the high correlation between acidity and calcium content imply the presence of oldhamite (CaS).

### Granulometric analysis

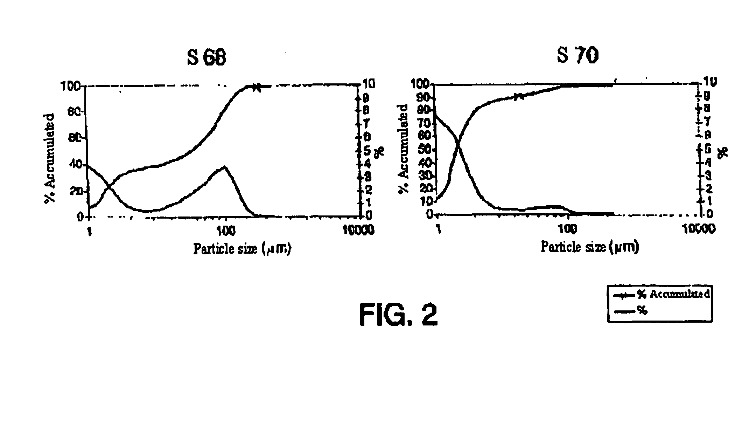

Figure 2 shows the results of the granulometric analysis of 2 representative IGCC ash samples, indicating that the ash has a very fine granulometry. The typical samples have a median granulometry of less than 3 microns.

### EXAMPLE 2

### Ge recovery [Lixiviation with water]

Different representative IGCC ash samples were subjected to lixiviation with water at 25°C during different lixiviation times (6, 12 and 24 hours) and different ash/liquid ratios (1/2, 1/5 and 1/10), in a closed reactor provided with stirring mechanisms. The mean yield obtained, expressed as an extraction percentage of the Ge content originally present in the ash, is included in Table 2.

**Table 2**

| **Extraction yields (%) of Ge from a typical IGCC ash with water at 25°C at different times and ash/water ratios (S/L in kg/l)** | | | |
|---|---|---|---|
| **S/L** | **Ge extraction %** | | |
| | **6 h** | **12 h** | **24 h** |
| 1/2 | 54 | 57 | 60 |
| 1/5 | 59 | 70 | 75 |
| 1/10 | 75 | 78 | 84 |

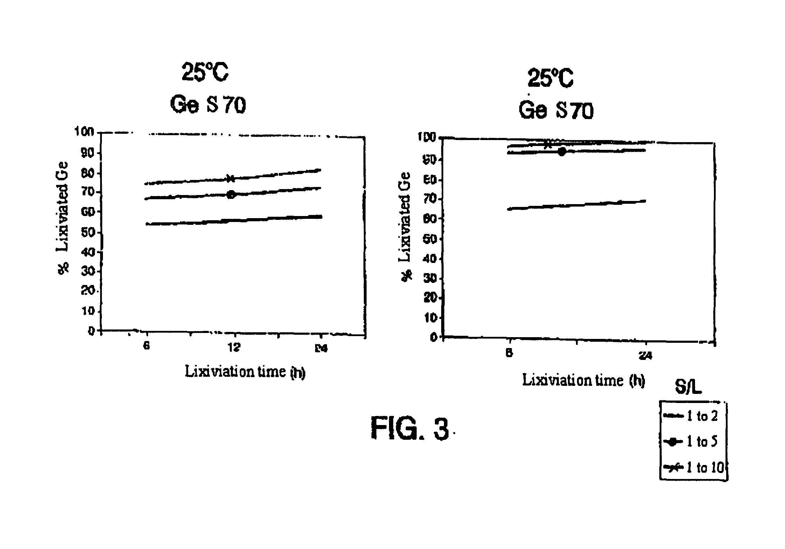

To analyze the influence of the temperature on the Ge lixiviation with water (extracting agent), several lixiviation trials were carried out, varying the temperature (from 25°C to 50°C), lixiviation time (6, 12 and 24 hours) and the S/L ratio (1/2, 1/5 and 1/10). The obtained results are shown in Figure 3, where it is clearly shown that the Ge extraction yield increases with temperature and is practically 100% after 6 hours, at 50°C using water as an extracting agent and an ash/water ratio of 1 kg per 10 liters. Very high yields (>95%) were also obtained with lower doses of water (1 kg per 5 liters).

## Claims

1. Process for recovering Ge from fly ash generated in an Integrated Gasification Combined Cycle (IGCC) type thermal power plant, which comprises:
a) lixiviating said IGCC ash with water to solubilize all or part of the Ge content in said IGCC ash;
b) separating the solid and liquid phases existing in the solution or suspension resulting from step a) into a solid phase (S1) and into a liquid phase (L1) containing Ge; and
c) recovering Ge from said liquid phase (L1).

2. Process according to claim 1, wherein said IGCC ash has the following interval of concentrations and typical chemical composition:
| | **Representative (%)** | **Typical (%)** |
|---|---|---|
| **%** | | |
| SiO₂ | 50.0-65.0 | 62.6 |
| Al₂O₃ | 15.0-25.0 | 17.8 |
| Ca | 2.0-5.0 | 2.3 |
| Fe | 2.0-5.0 | 3.4 |
| K | 2.5-4.0 | 3.0 |
| S | 0.8-1.8 | 1.1 |
| Pb | 0.2-0.8 | 0.4 |
| Zn | 0.2-0.8 | 0.4 |
| Mg | 0.3-0.7 | 0.5 |
| TiO₂ | 0.3-0.7 | 0.6 |
| P₂O₅ | 0.4-0.7 | 0.4 |
| V | 0.3-0.6 | 0.5 |
| Na | 0.3-0.5 | 0.4 |
| Ni | 0.1-0.3 | 0.2 |
| | | |
| **mg/kg** | | |
|---|---|---|
| As | 450-850 | 564 |
| Ga | 100-350 | 149 |
| Ge | 100-350 | 194 |
| Mn | 200-600 | 472 |

3. Process according to claim 1, wherein said lixiviation is carried out at a temperatare comprised between 0°C and 400°C.

4. Process according to claim 1, wherein said lixiviation is carried out with an JGCC ash/liquid (S/L) ratio comprised between 1/1 and 1/10 (kg/l).

5. Process according to claim 1, wherein said recovery of the Ge content in the liquid phase (L1) is carried out by means of a method selected from among:
1) solubilized Ge concentration in the liquid phase (L1) in the form of germante by means of using an ion exchange resin of the anionic type, for extracting Ge, regenerating said resin and recovering the Ge from the liquid phase resulting from the regeneration of the anion exchange resin, in the form of germanium tetrachloride, after adding chlorine to said liquid phase, and, optionally hydrolyzing the germanium tetrachloride in an aqueous medium for obtaining germanic acid and, by drying, obtaining germanium oxide; or, alternatively, by means of
2) selective extraction of the Ge present in the liquid phase (L1) with a suitable solvent; or alternatively by means of
3) precipitation of the Ge present in the liquid phase (L1) in the form of sulfide after adding a sulfide.

6. A process according to any of claims 1 to 4 for recovering Ga and/or V as from the solid phase (S1) resulting from lixiviating the TGCC ash with water which comprises:
a) lixiviating said solid phase (S1) with an extracting agent comprising an aqueous base solution to solubilize all or part of the Ga and/or V content in said solid phase (S1);
b) separating the solid and liquid phases existing in the suspension resulting from step a) into a solid phase (S2) and into a liquid phase (L2) containing Ga and/or V; and
c) recovering Ga and/or V from said liquid phase (L2).

7. Process according to claim 6, wherein said lixiviation is carried out at a temperature comprised between 50°C and 250°C.

8. Process according to claim 6, wherein said lixiviation is carried out with a solid/liquid (S/L) ratio comprised between 1/2 and 1/20 (kg/l).

9. Process according to claim 6, wherein the recovery of Ga and/or V present in the liquid phase (L2) is carried out by means of selective extraction with suitable solvents, or by means of precipitation by neutralizing the liquid phase (L2).

10. Process according to any of claims 1 to 4 for recovering Ni from the solid phase (S1) resulting from lixiviating the IGCC ash with water comprising:
a) lixiviating said solid phase (S1) with an extracting agent comprising an aqueous acid solution to solubilixe all or part of the Ni content in said solid phase (S1);
b) separating the solid and liquid phases existing in the suspension resulting from step a) into a solid phase (S3) and into a liquid phase (L3) containing Ni; and
c) recovering Ni from said liquid phase (L3).

11. Process according to claim 10, wherein said lixiviation is carried out at a temperature comprised between 50°C and 250°C.

12. Process according to claim 10, wherein the recovery of Ni present in the liquid phase (L3) is carried out by means of selective extraction with a suitable solvent, or by means or precipitation by neutralizing the liquid phase (L3).

## Patentansprüche

1. Verfahren zur Rückgewinnung von Ge aus in einem Wärmekraftwerk vom Typ Kombiprozess mit integrierter Vergasung (IGCC, "Integrated Gasification Combined Cyclus") entstandenen Flugaschen, das Folgendes umfasst:
a) Auslaugung der besagten Asche des IGCC mit Wasser, um den gesamten Gehalt an Ge oder einen Teil des Gehalts in der besagten Asche des IGCC zu lösen;
b) Trennung der in der im Schritt a) erhaltenen Lösung oder Suspension vorhandenen Fest- und Flüssigphasen in eine feste Phase (S1) und in eine flüssige Phase (L1), die Ge enthält; und
c) Rückgewinnung von Ge aus der besagten flüssigen Phase (L1).

2. Verfahren nach Anspruch 1, bei dem die besagte Asche des IGCC folgende Konzentrationsbereich und gewöhnliche chemische Zusammensetzung aufweist:
| | **Repräsentativ (%)** | **Gewöhnlich (%)** |
|---|---|---|
| % | | |
| SiO₂ | 50,0 - 65,0 | 62,6 |
| Al₂O₃ | 15,0 - 25,0 | 17,8 |
| Ca | 2,0 - 5,0 | 2,3 |
| Fe | 2,0 - 5,0 | 3,4 |
| K | 2,5 - 4,0 | 3,0 |
| S | 0,8 - 1,8 | 1,1 |
| Pb | 0,2 - 0,8 | 0,4 |
| Zn | 0,2 - 0,8 | 0,4 |
| Mg | 0,3 - 0,7 | 0,5 |
| TiO₂ | 0,3 - 0,7 | 0,6 |
| P₂O₅ | 0,4 - 0,7 | 0,4 |
| V | 0,3 - 0,6 | 0,5 |
| Na | 0,3 - 0,5 | 0,4 |
| Ni | 0,1 - 0,3 | 0,2 |
| | | |
| **mg/kg** | | |
|---|---|---|
| As | 450 - 850 | 564 |
| Ga | 100 - 350 | 149 |
| Ge | 100 - 350 | 194 |
| Mn | 200 - 600 | 472 |

3. Verfahren nach Anspruch 1, bei dem die besagte Auslaugung bei einer Temperatur zwischen 0°C und 400°C stattfindet.

4. Verfahren nach Anspruch 1, bei dem die besagte Auslaugung mit einem zwischen 1/1 und 1/10 (kg/l) eingeschlossenen Verhältnis von Asche des IGCC / Flüssigkeit (S/L) durchgeführt wird.

5. Verfahren nach Anspruch 1, bei dem die Rückgewinnung des Gehalts an Ge aus der flüssigen Phase (L1) mit einer aus folgenden Methoden ausgewählten Methode durchgeführt wird:
1) Konzentration von gelöstem Ge in der flüssigen Phase (L1) in Form von Germanat, durch den Einsatz eines anionischen Ionenaustauschharzes, um Ge zu extrahieren, Regenerierung des besagten Harzes und Rückgewinnung des Ge aus der bei der Regenerierung des anionischen Ionenaustauschharzes entstehenden flüssigen Phase in Form von Germaniumtetrachlorid, nach Hinzufügen von Chlor zu der besagten flüssigen Phase und gegebenenfalls Hydrolyse des Germaniumtetrachlorids in einem wässrigen Mittel, um Germaniumsäure zu erhalten und, durch Trocknung, Germaniumoxyd zu erhalten; oder, alternativ hierzu, durch
2) selektives Extrahieren des in der flüssigen Phase (L1) vorhandenen Ge mit einem geeigneten Lösungsmittel; oder alternativ hierzu, durch
3) Ausfällen des in der flüssigen Phase (L1) vorhandenen Ge in Form von Sulfid, nach Zugabe eines Sulfids.

6. Verfahren nach einem der Ansprüche 1 bis 4 zur Rückgewinnung von Ga und/oder V aus der bei der Auslaugung der Asche des IGCC mit Wasser entstehenden festen Phase (S1), das Folgendes umfasst:
a) Auslaugung der besagten festen Phase (S1) mit einem Extrahierungsmittel, das eine basische wässrige Lösung enthält, um den gesamten in der besagten festen Phase (S1) enthaltenen Gehalt an Ga und/oder V oder einen Teil des Gehalts zu lösen;
b) Trennung der in der im Schritt a) erhaltenen Suspension vorhandenen Fest- und Flüssigphasen in eine feste Phase (S2) und in eine flüssige Phase (L2), die Ga und/oder V enthält; und
c) Rückgewinnung von Ga und/oder V aus der besagten flüssigen Phase (L2).

7. Verfahren nach Anspruch 6, bei dem die besagte Auslaugung bei einer Temperatur zwischen 50°C und 250°C stattfindet.

8. Verfahren nach Anspruch 6, bei dem die besagte Auslaugung mit einem zwischen 1/2 und 1/20 (kg/l) eingeschlossenen Verhältnis von fester / flüssiger Phase (S/L) durchgeführt wird.

9. Verfahren nach Anspruch 6, bei dem die Rückgewinnung von in der flüssigen Phase (L2) vorhandenem Ga und/oder V durch ein selektives Extrahieren mit geeigneten Lösungsmitteln oder durch Ausfällen durch Neutralisieren der flüssigen Phase (L2) durchgeführt wird.

10. Verfahren nach einem der Ansprüche 1 bis 4 für die Rückgewinnung von Ni aus der bei der Auslaugung der Asche des IGCC mit Wasser erhaltenen festen Phase (S1), das Folgendes umfasst:
a) Auslaugung der besagten festen Phase (S1) mit einem Extrahierungsmittel, das eine saure wässrige Lösung enthält, um den gesamten in der besagten festen Phase (S1) enthaltenen Gehalt an Ni oder einen Teil des Gehalts zu lösen;
b) Trennung der in der im Schritt a) erhaltenen Suspension vorhandenen festen und flüssigen Phasen in eine feste Phase (S3) und in eine flüssige Phase (L3), die Ni enthält; und
c) Rückgewinnung von Ni aus der besagten flüssigen Phase (L3).

11. Verfahren nach Anspruch 10, bei dem die besagte Auslaugung bei einer Temperatur zwischen 50°C und 250°C stattfindet.

12. Verfahren nach Anspruch 10, bei dem die Rückgewinnung von in der flüssigen Phase (L3) vorhandenem Ni durch ein selektives Extrahieren mit einem geeigneten Lösungsmittel oder durch Ausfällen durch Neutralisieren der flüssigen Phase (L3) durchgeführt wird.

## Revendications

1. Procédé de récupération de Ge à partir de cendres volantes produites dans une centrale d'énergie thermique de type Cycle Combiné à Gazéification Intégrée (CCGI), comprenant :
a) Lixivier ladite cendre du CCGI avec de l'eau afin de solubiliser tout ou une partie du contenu en Ge dans ladite cendre du CCGI;
b) Séparer les phases solide et liquide existant dans la solution ou suspension résultant de l'étape a) en une phase solide (S1) et une phase liquide (L1) contenant le Ge; et
c) Récupérer le Ge de ladite phase liquide (L1).

2. Procédé selon la revendication 1, dans lequel ladite cendre du CCGI a l'intervalle de concentrations et la composition chimique typique suivantes:
| | **Représentatif (%)** | **Typique (%)** |
|---|---|---|
| % | | |
| SiO₂ | 50,0-65,0 | 62,6 |
| Al₂O₃ | 15,0-25,0 | 17,8 |
| Ca | 2,0-5,0 | 2,3 |
| Fe | 2,0-5,0 | 3,4 |
| K | 2,5-4,0 | 3,0 |
| S | 0,8-1,8 | 1,1 |
| Pb | 0,2-0,8 | 0,4 |
| Zn | 0,2-0,8 | 0,4 |
| Mg | 0,3-0,7 | 0,5 |
| TiO₂ | 0,3-0,7 | 0,6 |
| P₂O₅ | 0,4-0,7 | 0,4 |
| V | 0,3-0,6 | 0,5 |
| Na | 0,3-0,5 | 0,4 |
| Ni | 0,1-0,3 | 0,2 |
| | | |
| **mg/kg** | | |
|---|---|---|
| As | 450-850 | 564 |
| Ga | 100-350 | 149 |
| Ge | 100-350 | 194 |
| Mn | 200-600 | 472 |

3. Procédé selon la revendication 1, dans lequel ladite lixiviation est réalisée à une température comprise entre 0°C et 400°C.

4. Procédé selon la revendication 1, dans lequel ladite lixiviation est réalisée avec un rapport cendre du CCGI/liquide (S/L) compris entre 1/1 et 1/10 (kg/l).

5. Procédé selon la revendication 1, dans lequel ladite récupération du contenu en Ge dans la phase liquide (L1) est réalisée au moyen d'une méthode choisie parmi :
1) Concentration de Ge solubilisé dans la phase liquide (L1) sous forme de germanate au moyen de l'utilisation d'une résine échangeuse d'ions du type anionique, pour extraire le Ge, régénérer ladite résine et récupérer le Ge de la phase liquide résultant de la régénération de la résine échangeuse d'ions, sous forme de tétrachlorure de germanium, après addition de chlore à ladite phase liquide, et, optionnellement hydrolyser le tétrachlorure de germanium dans un milieu aqueux pour obtenir de l'acide germanique et, en séchant, pour obtenir de l'oxyde de germanium; ou, alternativement, au moyen de l'
2) Extraction sélective du Ge présent dans la phase liquide (L1) avec un solvant approprié; ou alternativement au moyen de la
3) Précipitation du Ge présent dans la phase liquide (L1) sous forme de sulfure après addition d'un sulfure.

6. Procédé selon l'une des revendications 1 à 4 pour récupérer Ga et/ou V à partir de la phase solide (S1) résultant de la lixiviation de la cendre du CCGI avec de l'eau, comprenant :
a) Lixivier ladite phase solide (S1) avec un agent extracteur comprenant une solution basique aqueuse pour solubiliser tout ou une partie du contenu en Ga et/ou en V dans ladite phase solide (S1);
b) Séparer les phases solide et liquide existant dans la suspension résultant de l'étape a) en une phase solide (S2) et une phase liquide (L2) contenant Ga et/ou V; et
c) Récupérer Ga et/ou V de ladite phase liquide (L2).

7. Procédé selon la revendication 6, dans lequel ladite lixiviation est réalisée à une température comprise entre 50°C et 250°C.

8. Procédé selon la revendication 6, dans lequel ladite lixiviation est réalisée avec un rapport solide/liquide (S/L) compris entre 1/2 et 1/20 (kg/l).

9. Procédé selon la revendication 6, dans lequel la récupération du Ga et/ou du V présents dans la phase liquide (L2) est réalisée au moyen d'une extraction sélective avec des solvants appropriés, ou au moyen d'une précipitation en neutralisant la phase liquide (L2).

10. Procédé selon l'une des revendications 1 à 4 pour récupérer du Ni de la phase solide (S1) résultant de la lixiviation de la cendre du CCGI avec de l'eau, comprenant :
a) Lixivier ladite phase solide (S1) avec un agent extracteur comprenant une solution acide aqueuse pour solubiliser tout ou une partie du contenu en Ni dans ladite phase solide (S1);
b) Séparer les phases solide et liquide existant dans la suspension résultant de l'étape a) en une phase solide (S3) et une phase liquide (L3) contenant du Ni; et
c) Récupérer le Ni de ladite phase liquide (L3).

11. Procédé selon la revendication 10, dans lequel ladite lixiviation est réalisée à une température comprise entre 50°C et 250°C.

12. Procédé selon la revendication 10, dans lequel la récupération du Ni présent dans la phase liquide (L3) est réalisée au moyen d'une extraction sélective avec un solvant approprié, ou au moyen d'une précipitation en neutralisant la phase liquide (L3).
